Europäisches Patentamt

**European Patent Office**

Office européen des brevets

(19)

(11) Publication number: **0 029 080**

**B1**

(12)

# EUROPEAN PATENT SPECIFICATION

(45) Date of publication of patent specification: **15.02.84**

(51) Int. Cl.³: **F 16 K 3/18**

(21) Application number: **79890050.2**

(22) Date of filing: **16.11.79**

(54) Gate valve with position responsive interlock.

(43) Date of publication of application:
**27.05.81 Bulletin 81/21**

(45) Publication of the grant of the patent:
**15.02.84 Bulletin 84/7**

(84) Designated Contracting States:
**AT GB IT**

(56) References cited:
**DE - C - 709 220**
**US - A - 2 583 512**
**US - A - 2 855 175**
**US - A - 2 954 960**
**US - A - 3 051 434**

(73) Proprietor: **ACF INDUSTRIES, INCORPORATED**
**750 Third Avenue**
**New York, NY 10012 (US)**

(72) Inventor: **Alvarez, Patricio D.**
**1808 Third Street**
**Rosenberg Texas 77471 (US)**

(74) Representative: **Kretschmer, Adolf, Dipl.-Ing.**
**Schottengasse 3a**
**A-1014 Wien (AT)**

Courier Press, Leamington Spa, England.

## Gate valve with position responsive interlock

The invention relates to a gate valve comprising a housing having a valve chamber therein and inlet and outlet flow passageways communicating with the valve chamber, a seat about each flow passageway, an expansible ported gate assembly mounted in said chamber for linear movement between open and closed positions relative to the passageways wherein said gate assembly comprises a gate member and a segment member, the gate member being connected to a control stem extending to one end of the housing while the segment member floats in dependence on the gate member, said two members having parallel outer sealing surfaces to engage the valve seats and complementary inner surfaces so that the two members interface one another, each of said inner surfaces being a bifurcated surface inclined with respect to the sealing surfaces and diverging away from a point at about its midlength to form two pairs of wedging surface which operate to expand the assembly perpendicularly to said seats into sealing engagement therewith, said members having a pair of opposed side surfaces joining said outer and inner surfaces, and also having the aligned ports through one of the pairs of wedging surfaces, said gate assembly also having a positioning device inter-connecting said gate and segment members, said positioning device including a guide rail secured to the interior of said valve chamber adjacent one of said seats and extending parallel to the direction of travel of the gate assembly, and a rocker arm pivotally secured to one of the two gate assembly members through one of the side surfaces thereof adjacent said guide rail, the rocker arm with its opposed extremities contacting said guide rail.

Gate valves of the sliding gate and segment type have been used extensively for many years, and from the beginning, the design engineer has faced this problem. At either end of the stroke of the pair of members, they must be expanded in thickness by stopping one member and pushing or pulling on the other to cause it to climb the wedging surface of the halted member, thus sealing against the valve seats. Between extremities, on the other hand, it is necessary to minimize the thickness of the sliding members so that they will not bind against the valve seats and jamb the gate and segment in a half-and-half position.

Prior art solutions to this problem fall into two general categories, springs and centralizers. The former is exemplified in US—A— 2 954 960. This patent discloses the use of an ox yoke spring over a central pin in one member and having its ends tucked under a pair of opposed pins protruding from the other member. The spring forces the two members together so long as no opposed axial forces are exerted on the members. At the end of a stroke, when the floating segment member is halted by contact with a fixed stop member, an axial force exerted on the gate member through the control stem causes it to climb up the now fixed segment member, thus expanding the assembly and causing it to seal against the opposed valve seats. It should be noted that with this type of assembly, the force applied to the gate member must first overcome the spring force.

The centralizer type of structure is exemplified in US—A—2 583 512. Even a summary description of this structure would be too lengthy to set forth here, but it will be noted that the structure is complicated and includes a pair of fixed guides and a mechanical interlock between gate and segment. The latter includes a guide shoe which, during any sliding movement of the gate and segment, is constrained to travel in contact with both fixed guides; in such position, the elements linked to the guide shoe force the gate and segment to stay in a central position in which they are pressed together with both pairs of inclined surfaces in tight contact.

A gate valve is known in accordance with the prior art portion of claim 1 (US—A—2 855 175) in which the rocker arm pivotally secured to the segment member is centering said member with respect to the gate member by abutting with its curved end faces the opposed surfaces of a pair of spaced lugs protruding from the side surface of the gate member, as long as the gate assembly is somewhere between the open and closed positions. Cam surfaces adjacent the opposed extremities of the rocker arm cooperate with the guide rail at one side thereof, which has sloping end surfaces on both ends. At the other side of the rocker arm there is a guide rail which is cut away at its mid portion. In the open and closed positions of the gate assembly one or the other end portion, resp., of the rocker arm may move into the cut away portion of the latter guide rail whereby the rocker arm is rotatable to permit relative displacement between the gate member and the segment member so that said members may move to expanded positions.

In connection with said rotation of the rocker arm considerable frictional reacting forces are to be expected occurring between the lug on the side surface of the gate member and the curved end face of the rocker arm. Moreover, the opposing rails are to be specially shaped and are to be carefully aligned within the housing of the gate valve and with respect to each other for obtaining the desired cooperation.

The invention as claimed is intended to remedy these drawbacks. It solves the problem by providing the guide rail with a single interruption therein, and the rocker arm having a slot engaging a pin protruding from the corresponding side surface of the other gate assembly member and having a pair of downwardly extending lobes at its opposed extremities, on opposed sides of its connection to the two members, said lobes contacting and riding on said guide rail except when one of them enters the interruption in the guide rail and permits the rocker arm to rotate, whereby during movement of the gate assembly between the two sealing positions at the ends of its stroke, said rocker arm lobes are both in contact with the guide rail and maintain the two members in non-wedging and non-expansive relationship with one another, preventing drag between the moving assembly and the valve seats, while at the ends of the stroke of the assembly, one of said lobes enters the interruption in the guide rail and permits the two members to be wedged into sealing relationship with the valve seats.

The advantages offered by the invention are mainly that only the guide rail or guide rails adjacent one of the sealing surfaces of the gate assembly must be provided with a control track which has the shape of a single interruption between two rail segments, and that the use of control transmission gearing subjected to any considerable friction is avoided.

The rocker arm may be a simple plate member having the general shape of an isosceles triangle having an elongated base extending generally parallel to said guide rail and said lobes extending downwardly from said base toward the guide rail.

Preferably there are a pair of said guide rails secured to the opposed pair of seats and a pair of rocker arms pivotally secured to the opposed sides of the gate and segment members. Thereby a symmetrical exertion of forces onto said members is obtained.

The distance between the rocker arm lobes shall be equal to the distance traveled by the gate valve assembly between its end positions, whereby said interruption in the guide rail accommodates said lobes alternately as the assembly reaches its opposed end positions and the rocker arm is urged into clockwise and counterclockwise rotated positions.

The interruption in the guide rail is located along its length to correspond to the end positions of the slidable gate assembly; i.e., the lobe at one end of the rocker arm can enter the interruption only when the segment member can move no further and additional force is exerted on the gate. This causes the rocker arm to pivot and permits the gate to slide on the wedge surface of the segment, expanding the thickness of the gate assembly and causing it to seal against the opposed seats. Between such extremities, both lobes of the rocker arm contact the guide rail and keep both pairs of wedge surfaces in tight contact, minimizing their overall thickness and preventing any drag against the valve seats.

One way of carrying out the invention is described in detail below with reference to the drawings which illustrate a specific embodiment, in which:—

Figure 1 is a longitudinal section through the body of a gate valve embodying the invention, this view showing the positions of the parts during travel of the gate assembly between open and closed positions, or vice versa.

Figure 2 is a longitudinal section like Figure 1, this view showing the positions of the parts in either open or closed positions, after the gate assembly has been expanded to seal against the opposed valve seats.

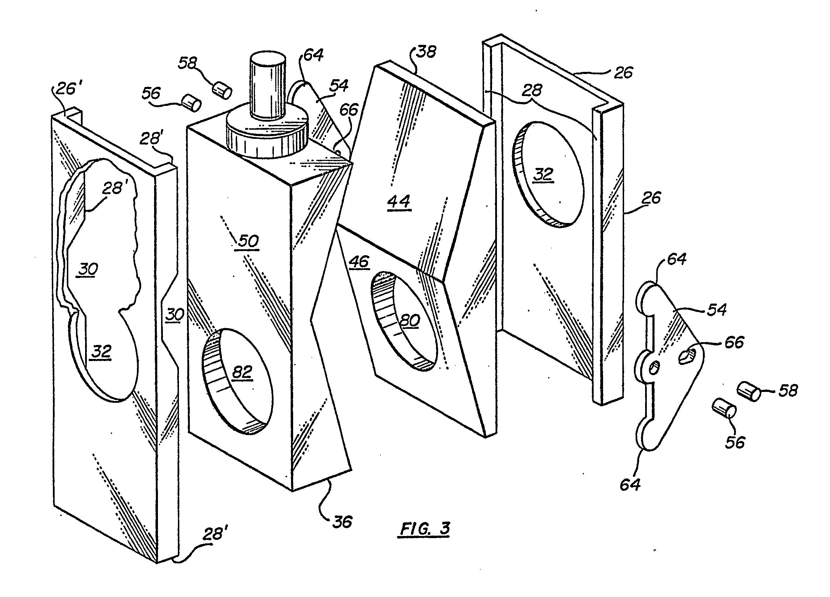

Figure 3 is an exploded isometric view showing the principal components of the assembly.

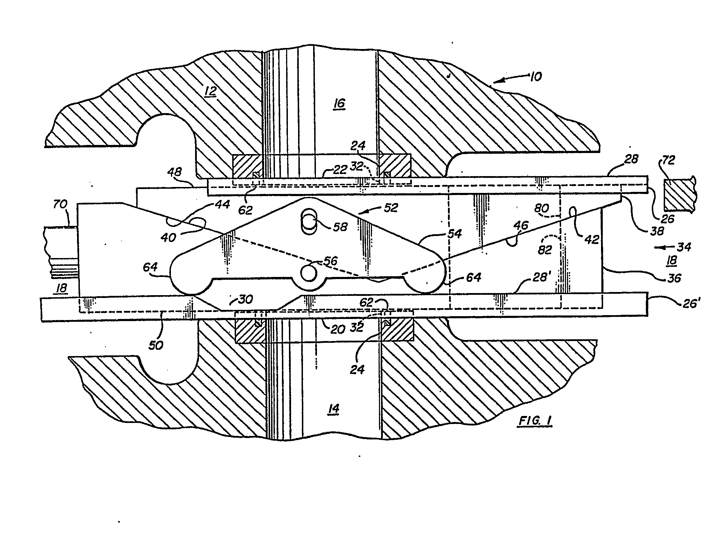

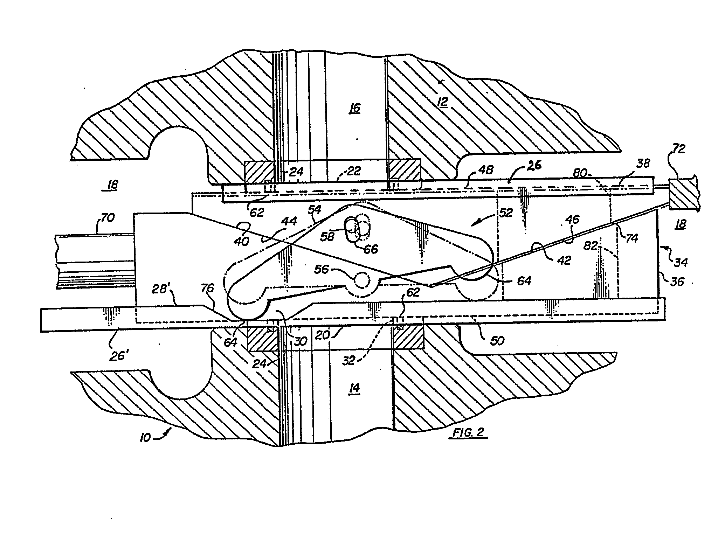

Figures 1 and 2 show a gate valve 10 comprising a housing 12 having a through passageway 14, 16 interrupted by an orthogonal interior valve chamber 18 which houses the gate mechanism of the valve. The two portions 14, 16 of the interrupted fluid passageway intersect the gate operating chamber 18 in opposed ports, respectively 20 and 22, which lie in opposed parallel planes and are there provided with seats. While various types of seats including metal-to-metal may be utilized, the drawing illustrates replaceable seats 24 secured in the indicated counterbores in the housing wall which defines ports 20 and 22.

The assembly includes a pair of seat skirts 26 which surround the seats and are provided with a pair of inturned edge flanges 28 which serve as guides for the traveling gate assembly. In the present invention, one of the seat skirts is modified and is designated 26', the modification consisting of providing in the flanges or guard rails 28' a gap 30 which is disposed along the length of rail 28' at a preselected location enabling it to receive one of the lobes 64 of rocker arm 54, as discussed further below.

It should be noted that the openings 32 in skirts 26 26' are of a diameter to receive the seats 24, which protrude from ports 20 and 22 through openings 32 so that the sealing contacts are between the flat surfaces 48 and 50 of the gate members and the planar outer ends 62 of the seats. These openings 32, of course, are aligned with passageways 82 and 80 in gate 36 and segment 38 when the latter are in their end position corresponding to an open valve. The two guard rails 28 and 28' of either skirt 26 or 26' extend lengthwise in the direction of travel of the gate assembly, of course, and are spaced from one another by the width of such assembly, plus a small operational clearance.

Figure 1 shows the gate assembly 34, consisting of gate 36 and segment 38 in its traveling attitude, which is the attitude it is designed and forced to assume in all positions of gate assembly 34 except at the opposed ends of its linear stroke. Such two positions, which can be designated sealed open and sealed closed, are the only two positions calling for wedging action between the gate 36 and segment 38. In all other positions, the divergent wedge surfaces 40 and 42 of gate 36 are in tight contact with the corresponding interfacing wedge surfaces 44 and 46 of segment 36, 40 with 44 and 42 with 46. It should be noted that there is no gap between either of these two pairs of contacting surfaces. In such attitude, it is apparent that the overall thickness of the assembly 34, measured along a perpendicular between the opposed and parallel flat outer surfaces 48 and 50 of segment 38 and gate 36, is at a minimum. With such minimum thickness, there is an operational clearance between each sealing surface 48 and 50 and the sealing surfaces 62 of valve seats 24, insuring that the gate assembly 34 can be moved without binding.

Such gapless contact between the diverging wedge surfaces 40—44 and 42—46 is insured by the disposition of the positioning device assembly 52, consisting of the rocker arm 54 and the pair of pins 56 and 58. The rocker arm 54 is basically a thin plate having the general form of an isosceles triangle with its base leg extending generally parallel to the guide rail 28'..At the opposed ends of this base leg, a pair of lobes 64 extend downwardly toward the guide rail, and in the traveling attitude of the assembly shown in Figure 1, these lobes 64 both contact the upper edge of the guide rail.

The pin 56 extends through rocker arm 54 and is secured in an opening in the gate member 36. It serves as the pivot point for the rocker arm, and moves linearly with the rocker arm with each stroke. Rocker arm 54 thus has only one degree of freedom, rotation about pivot pin 56, and so long as both of its lobes 64 are in contact with guide rail 28', even this one degree of freedom can not be exercised.

The positioning device 52 is completed by the pin 58 secured in and extending from the side surface of segment 38 and through the slot 66 in rocker 54. Slot 66 has a width measured along the direction of the gate assembly to receive pin 58 in snug relationship but is elongated in the orthogonal direction, in the direction of fluid flow through the valve.

In Figure 1, the gate assembly is being pushed toward the right end position by the stem 70, which is rigidly secured to the gate 36, carrying segment 38 with the assembly. Although the left hand lobe 64 is about to encounter the gap 30 in guide rail 28', the entire assembly is free to move to the right in the figure until one member of the gate assembly encounters a stop. It is important to note that the positioning device is not self operating; there is no rotation of the rocker arm 54 simply because a lobe 64 is in registry with the gap. Something further must occur before the rocker arm rotates; it must be compelled to rotate.

That further action is illustrated in Figure 2, which actually shows the positions of the parts at the end of two steps in a sealing sequence. First, the segment member 38 of the assembly has contacted stop 72, which is part of the fixed housing 12, halting any further movement of this member to the right. Secondly, continued rightward thrust applied to gate member 36 through the stem 70 has caused it to move further to the right, further than segment 38. In so doing, wedge surface 40 of the gate pushes against wedge surface 44 of the segment and actually slides along it for a short distance. The segment 38 is lifted up, pushing it into sealing contact with the upper seat 24, and at the same time the gate member 36 is pushed into sealing contact with lower seat 24. A gap 74 is opened between wedge surfaces 42 and 46, the size of which gap is indicative of the increase in thickness of the gate assembly.

Such expansion of the gate assembly is accompanied by a counter-clockwise rotation of rocker 54, to that its left hand lobe 64 enters gap 30. Such rotation occurs because pivot pin 56 moves to the right relative to slot pin 58, the effect being the same as though pin 58 has moved to the left relative to pin 56. Pin 58 pushes to the left against the wall of slot 66, bringing about the rotation. It would seem that such pushing action would occur even if there were no slot 66, i.e., if this opening were circular, receiving pin 58 snugly on all sides. However, the opening must be slotted as shown to accommodate the movement of pin 58 upwardly as segment 38 is raised during the wedging action; without the slot, such upward movement can not take place and the gate and segment members would remain locked in their traveling relationship.

It is also important to note that, although it is necessary that the rocker arm rotate as described in order that the gate assembly expand its thickness and seal against the valve seats, the time when such expansion in thickness occurs is not dictated by the time when the lobe 64 arrives in the proximity of gap 30. The chain of events is initiated by the stopping of segment 38 by stop member 72, and then by the continued travel of gate 36. Thus, the precise location of gap 30 along guide rail 28' is not critical, and some manufacturing tolerance is permissible.

Having read the description of one sealing sequence, the sequence of the reverse movement will be apparent to the reader. As the rightward thrust through stem 70 is relaxed and a leftward pull is exerted through it on gate 36, the gate will move leftward a short distance to close gap 74. Such short motion will at the same time cause rocker arm 54 to rotate clockwise to its Figure 1 position, aided if necessary by the cam surface 76 at the left end of gap 30. This rotation will pull segment 38 and gate 36 back into their minimum thickness positions with both pairs of interfacing wedge surfaces in tight contact.

The reverse stroke, leftward in the figures, will be as depicted in Figure 1, and the sequence at the end of such stroke will be more or less a mirror image of that described. The wedging and expansion and sealing will be initiated when the left hand end of segment 38 strikes a fixed stop and further pull is applied to the gate member. A gap will be formed between wedge surfaces 40 and 44 as wedge surface 42 pushes against 46 and forces segment 38 into sealing position. This time the rocker arm 54 rotates clockwise, and the right hand lobe 64 enters the same gap 30. Again, the precise location of the gap is not critical.

Having described a preferred embodiment, the present inventor wishes it to be known that he does not consider himself limited thereby. Many substantially similar means for accomplishing the same result in substantially the same manner will be apparent to those of average skill in the art, and such means are to be considered within the scope of the invention, which is to be judged only by the appended claims.

## Claims

1. A gate valve comprising a housing (12) having a valve chamber (18) therein and inlet and outlet flow passageways (14, 16) communicating with the valve chamber (18), a seat (24) about each flow passageway (14, 16), an expansible ported gate assembly (34) mounted in said chamber (18) for linear movement between open and closed positions relative to the passageways (14, 16) wherein said gate assembly (34) comprises a gate member (36) and a segment member (38), the gate member (36) being connected to a control stem (70) extending to one end of the housing (12) while the segment member (38) floats in dependence on the gate member (36), said two members having parallel outer sealing surfaces (48, 50) to engage the valve seats and complementary inner surfaces (40, 42, 44, 46) so that the two members interface on another, each of said inner surfaces (40, 42, 44, 46) being a bifurcated surface inclined with respect to the sealing surfaces and diverging away from a point at about its mid-length to form two pairs of wedging surfaces which operate to expand the assembly (34) perpendicularly to said seats into sealing engagement therewith, said members (36, 38) having a pair of opposed side surfaces joining said outer and inner surfaces, and also having the aligned ports (80, 82) through one of the pairs of wedging surfaces, said gate assembly (34) also having a positioning device (52) interconnecting said gate (36) and segment (38) members, said positioning device (52) including a guide rail (28') secured to the interior of said valve chamber (18) adjacent one of said seats (24) and extending parallel to the direction of travel of the gate assembly (34), and a rocker arm (54) pivotally secured to one of the two gate assembly members through one of the side surfaces thereof adjacent said guide rail (28'), the rocker arm (54) with its opposed extremities contacting said guide rail (28'), characterized in that said guide rail (28') has single interruption (30) therein, and that said rocker arm (54) has a slot (66) engaging a pin (58) protruding from the corresponding side surface of the other gate assembly member and has a pair of downwardly extending lobes (64) at its opposed extremities, on opposed sides of its connection to the two members, said lobes (64) contacting and riding on said guide rail (28') except when one of them enters the interruption (30) in the guide rail (28') and permits the rocker arm (54) to rotate, whereby during movement of the gate assembly (34) between the two sealing positions at the ends of its stroke, said rocker arm lobes (64) are both in contact with the guide rail (28') and maintain the two members in non-wedging and non-expansive relationship with one another, preventing drag between the moving assembly (34) and the valve seats (24), while at the ends of the stroke of the assembly, one of said lobes (64) enters the interruption (30) in the guide rail (28') and permits the two members (36, 38) to be wedged into sealing relationship with the valve seats (24).

2. The gate valve of claim 1 in which said rocker arm (54) is a plate member having the general shape of an isosceles triangle having an elongated base extending generally parallel to said guide rail (28') and said lobes (64) extending downwardly from said base toward the guide rail (28').

3. The gate valve of claim 1 or 2 in which there are a pair of said guide rails (28, 28') secured to the opposed pair of seats (24) and a pair of rocker arms (54) pivotally secured to the opposed sides of the gate (36) and segment members (38).

4. The gate valve of claim 1, 2 or 3 in which the distance between said two lobes (64) is equal to the distance traveled by the gate valve assembly (34) between its end positions, whereby said interruption (30) in the guide rail (28') accommodates said lobes (64) alternately as the assembly reaches its opposed end positions and the rocker arm (54) is urged into clockwise and counterclockwise rotated positions.

## Revendications

1. Vanne comprenant un corps (12) ayant une chambre de vanne (18) à l'intérieur et des passages d'écoulement d'entrée et de sortie (14, 16) communiquant avec la chambre de vanne (18), un siège (24) autour de chaque passage d'écoulement (14, 16), et un ensemble d'obturateur perforé expansible (34) monté dans la chambre (18) en vue d'un mouvement linéaire entre des positions ouverte et fermée relativement aux passages (14, 16), dans laquelle cet ensemble d'obturateur (34) comprend un élément d'obturateur (36) et un élément de segment (38), l'élément d'obturateur (36) étant relié à une tige de commande (70) qui arrive jusqu'à une extrémité du corps (12), tandis que l'élément de segment (38) flotte sous la dépendance de l'élément d'obturateur (36), ces deux éléments ayant des surfaces extérieures d'étanchéité parallèles (48, 50) pour s'appliquer aux sièges de vanne et des surfaces intérieures complémentaires (40, 42, 44, 46) de sorte que les deux éléments sont face à face, chacune de ces surfaces intérieures (40, 42, 44, 46) étant une surface fourchue inclinée relativement aux surfaces d'étanchéité et divergeant en s'éloignant d'un point situé à peu près au milieu de sa longueur pour former deux paires de surfaces de coinçage qui agissent de manière à dilater l'ensemble (34) perpendiculairement aux sièges pour les appliquer à ceux-ci de façon étanche, les éléments (36, 38) présentant une paire de surfaces latérales opposées rejoignant les surfaces extérieure et intérieure et ayant aussi les orifices alignés (80, 82) à travers l'une des paires de surfaces de coinçage, l'ensemble d'obturateur (34) présentant aussi un dispositif de positionnement (52) qui relie l'élément d'obturateur (36) et l'élément de segment (38), ce dispositif de positionnement (52) comprenant une glissière de guidage (28') fixée à l'intérieure de la chambre de vanne (18) auprès de l'un des sièges (24) et s'étendant parallèlement à la direction de mouvement de l'ensemble d'obturateur (34), et un bras oscillant (54) fixé de façon pivotante à l'un des éléments d'obturateur par l'une de ses surfaces latérales adjacentes à la glissière de guidage (28'), le bras oscillant (54) touchant par ses extrémités opposées la glissière de guidage (28'), caractérisée par le fait que la glissière de guidage (28') présente une seule interruption (30) et que le bras oscillant (54) présente une fente (66) coopérant avec un doigt (58) dépassant de la surface latérale correspondante de l'autre élément d'ensemble d'obturateur et comporte une paire de lobes (64) dirigés vers le bas à ses extrémités opposées, sur des côtés opposés de sa liaison avec les deux éléments, ces lobes (64) touchant la glissière de guidage (28') et courant sur celle-ci, excepté quand l'un d'eux entre dans l'interruption (30) de la glissière de guidage (28') et permet au bras oscillant (54) de tourner, de sorte que, pendant le mouvement de l'ensemble d'obturateur (34) entre les deux positions d'étanchéité aux extrémités de sa course, les lobes (64) du bras oscillant sont tous deux en contact avec la glissière de guidage (28') et maintiennent les deux éléments dans une position relative sans coinçage et sans expansion, empêchant un frottement entre l'ensemble mobile (34) et les sièges de vannes (24), tandis qu'aux extrémités de la course de l'ensemble, l'un des lobes (64) entre dans l'interruption (30) de la glissière de guidage (28') et permet aux deux éléments (36, 38) de se coincer en relation d'étanchéité avec les sièges de vanne (24).

2. Vanne selon la revendication 1, dans laquelle le bras oscillant (54) est un élément en forme de plaque présentant la forme générale d'un triangle isocèle muni d'une base allongée dirigée généralement parallèlement à la glissière de guidage (28') et les lobes (64) se dirigeant vers le bas, de la base vers la glissière de guidage (28').

3. Vanne selon l'une des revendications 1 et 2, dans laquelle il existe une paire de glissières de guidage (28, 28') fixée aux deux sièges opposés (24) et une paire de bras oscillant (54) fixés de façon pivotante aux côtés opposés de l'élément d'obturateur (36) et de l'élément de segment (38).

4. Vanne selon l'une des revendications 1, 2 et 3, dans laquelle la distance entre les deux lobes (64) est égale à la distance parcourue par l'ensemble d'obturateur (34) entre ses positions extrêmes, de sorte que l'interruption (30) de la glissière de guidage (28') loge alternativement les lobes (64), lorsque l'ensemble atteint ses positions extrêmes opposées, et que le bras oscillant (54) est sollicité vers des positions déviées dans le sens des aiguilles d'une montre et en sens inverse des aiguilles d'une montre.

**Patentansprüche**

1. Schieber mit einem eine Kammer (18) aufweisenden Gehäuse (12) mit der Kammer (18) in Verbindung stehenden einlaßseitigen und auslaßseitigen Durchflußkanälen (14, 16), je einem Sitz (24) an jedem Durchflußkanal (14, 16), einer geradlinig bezüglich der Durchflußkanäle (14, 16) bewegbaren, in der Kammer (18) angeordneten ausdehnbaren Schieberplatte (34) mit Leitrohr, die einen Plattenteil (36) und einen Segmentteil (38) aufweist, wobei der Plattenteil (36) mit einer sich zu einem Ende des Gehäuses (12) erstreckenden Betätigungsstange (70) verbunden ist, der Segmentteil (38) in Schleppverbindung mit dem Plattenteil (36) steht und beide Schieberplattenteile parallele äußere Dichtflächen (48, 50) zum Zusammenwirken mit den Sitzen und komplementäre innere Flächen (40, 42, 44, 46) aufweisen, mit welchen die beiden Schieberplattenteile aneinanderliegen, von welchen Flächen (40, 42, 44, 46) jede gegabelt, bezüglich der Dichtflächen geneigt ist und von einer ungefähr auf der halben Länge gelegenen Stelle divergiert, so daß zwei Paare von Keilflächen zum Ausdehnen der Schieberplatte (34) senkrecht zu den Sitzen in dichtende Berührung mit diesen gebildet sind, wobei die Schieberplattenteile (36, 38) ein Paar ihre äußeren und inneren Flächen verbindende, einander gegenüberliegende Seitenflächen haben, die aufeinander ausgerichteten Leitrohre (80, 82) sich durch eines der Paare von Keilflächen erstrecken und die Schieberplatte (34) eine den Plattenteil (36) und den Segmentteil (38) koppelnde Ausrichvorrichtung (52) mit einer Führungsschiene (28'), die bei einem der Sitze (24) in der Kammer (18) angebracht ist und sich parallel zur Bewegungsrichtung der Schieberplatte (34) erstreckt, sowie eine an einer Seitenfläche eines der Schieberplattenteile in der Nähe der Führungsschiene (28') schwenkbar angeordnete Wippe (54) aufweist, deren entgegengesetzte Armenden an der Führungsschiene (28') anliegen, dadurch gekennzeichnet, daß die Führungsschiene (28') eine einzige Unterbrechung (30) aufweist und daß die Wippe (54) mit einem einen von der zugeordneten Seitenfläche des anderen Schieberplattenteiles abstehenden Stift (58) aufnehmenden Schlitz (66) versehen ist und an ihren entgegengesetzten Armenden ein Paar abwärts ragender Lappen (64) hat, welche an der Führungsschiene (28') anliegen und gleiten, außer wenn ein Lappen in die Unterbrechung (30) der Führungsschiene (28') einfällt und die Wippe (54) verschwenkt, wodurch während der Bewegung der Schieberplatte (34) zwischen den beiden dichtenden Stellungen an den Enden ihres Hubes beide Lappen (64) der Wippe an der Führungsschiene (28') anliegen und die zwei Schieberplatteteile in nicht-verkeilender und nicht-ausdehnender gegenseitiger Lage halten, so daß ein Schleifen der bewegten Schieberplatte (34) an den Sitzen (24) vermieden wird, wogegen an den Enden des Hubes der Schieberplatte einer der Lappen (64) in die Unterbrechung (30) der Führungsschiene (28') einfällt und das Verkeilen der beiden Schieberplattenteile (36, 38) in Dichtungsstellung mit den Sitzen (24) zuläßt.

2. Schieber nach Anspruch 1, bei welchem die Wippe (54) eine Platte mit der allgemeinen Form eines gleichschenkeligen Dreiecks mit einer sich im wesentlichen parallel zur Führungsschiene (28') erstreckenden langen Grundlinie ist, von der die Lappen (64) zur Führungsschiene (28') nach unten ragen.

3. Schieber nach Anspruch 1 oder 2, bei welchem ein Paar Führungsschienen (28, 28') vorgesehen ist, welche an den einander gegenüberliegenden Sitzen (24) befestigt sind, und zwei Wippen (54) an den gegenüberliegenden Seiten des Plattenteiles (36) und des Segmentteiles (38) drehbar angebracht sind.

4. Schieber nach Anspruch 1, 2 oder 3, bei welchem der Abstand zwischen den beiden Lappen (64) gleich dem Hub der Schieberplatte (34) zwischen ihren Endstellungen ist, wobei die Unterbrechung (30) der Führungsschiene (28') abwechselnd einen Lappen (64) aufnimmt, wenn die Schieberplatte die gegenüberliegenden Endstellungen erreicht und die Wippe (54) im Uhrzeigersinn bzw. im Gegenuhrzeigersinn verdreht wird.

FIG. I

FIG. 2

0 029 080

FIG. 3

0 029 080